# EUROPÄISCHE PATENTSCHRIFT

(11) **EP 3 837 209 B1**
(45) Veröffentlichungstag und Bekanntmachung des Hinweises auf die Patenterteilung: **01.01.2025**
(21) Anmeldenummer: 19748798.6
(22) Anmeldetag: 30.07.2019
(51) Int. Cl.: C01B 3/00, C01B 3/22

(54) **VERFAHREN UND VORRICHTUNG ZUM BEREITSTELLEN VON WASSERSTOFFGAS**
PROCESS AND DEVICE FOR PROVIDING HYDROGEN GAS
PROCÉDÉ ET DISPOSITIF PERMETTANT DE FOURNIR DU GAZ HYDROGÈNE

(30) Priorität: 14.08.2018 DE 102018213689
(43) Veröffentlichungstag der Anmeldung: 23.06.2021
(73) Patentinhaber: HYDROGENIOUS LOHC TECHNOLOGIES GMBH, 91058 Erlangen (DE)
(72) Erfinder: OBERMEIER, Jonas, 91054 Erlangen (DE); PAETZ, Caspar, 91054 Erlangen (DE); TEICHMANN, Daniel, 80796 München (DE)
(74) Vertreter: Rau, Schneck & Hübner Patentanwälte Rechtsanwälte PartGmbB
(86) Internationale Anmeldenummer: PCT/EP2019/070498
(87) Internationale Veröffentlichungsnummer: WO 2020/035307

(56) Entgegenhaltungen:
- DE-A1- 102015 225 394
- DE-A1- 102016 222 596
- US-A1- 2009 274 615
- US-A1- 2016 214 858
- ANDRÉ FIKRT ET AL: "Dynamic power supply by hydrogen bound to a liquid organic hydrogen carrier", APPLIED ENERGY., vol. 194, 1 May 2017 (2017-05-01), GB, pages 1 - 8, XP055627888, ISSN: 0306-2619, DOI: 10.1016/j.apenergy.2017.02.070

## Beschreibung

Die vorliegende Patentanmeldung nimmt die Priorität der deutschen Patentanmeldung DE 10 2018 213 689.0 in Anspruch.

Die Erfindung betrifft ein Verfahren zum Bereitstellen von Wasserstoffgas.

Eine Vorrichtung und ein Verfahren zum Bereitstellen von Wasserstoff in Gebäuden ist beispielsweise aus der EP 2 748 885 A1 bekannt. Für einen wirtschaftlichen Betrieb der Anlage sind großbauende Komponenten, insbesondere Speicherbehälter und Reaktoren, erforderlich. Fikrt, A. et al.: "Dynamic power supply by hydrogen bound to a liquid organic hydrogen carrier", Applied Energy, 194 (2017) 1-8, offenbart ein Verfahren zur Bereitstellung von Wasserstoffgas. DE 10 2015 225 394 offenbart ein Verfahren zur Energieerzeugung sowie eine Energieerzeugungsvorrichtung. US 2016/0 214 858 A1 offenbart einen Mehrzonendehydrierreaktor. US 2009/0 274 615 A1 offenbart eine Vorrichtung für die Freisetzung von Wasserstoffgas durch Dehydrierung von kohlenwasserstoffhaltigen Brennstoffen.

DE 10 2016 222 596 A1 offenbart ein Verfahren zum Bereitstellen von Wasserstoffgas.

Die WO 2017/102 285 A1 offenbart die Nutzung mehrerer Reaktoren zur Freisetzung von Wasserstoffgas aus flüssigen organischen Trägermaterialien. Die Reaktoren werden in einer ParallelAnordnung betrieben. Je nach Lastzustand müssen Reaktoren zu- oder abgeschaltet werden. Aus der WO 2015/061 215 A2 und der US 7,766,968 B2 ist jeweils die Nutzung mehrerer Reaktoren in Reihenanordnung bekannt. Die Reaktionsbedingungen in den hintereinander geschalteten Reaktoren sind unterschiedlich. Die WO 2014/044 706 A1 offenbart die Nutzung eines Wasserstoffgasspeichersystems basierend auf flüssigen organischen Trägermedien für stationäre und mobile Anwendungen. Freigesetztes Wasserstoffgas kann in einer Brennstoffzelle in elektrische Energie umgesetzt werden.

Der Erfindung liegt die Aufgabe zugrunde, das Bereitstellen von Wasserstoffgas aus einem Wasserstoffträgermedium für den mobilen Einsatz, insbesondere in wasserstoffbetriebenen Fahrzeugen wie Zügen, Lastkraftwagen, Schiffen, Bussen, Personenkraftwagen, Traktoren, zu ertüchtigen.

Die Aufgabe wird durch die Merkmale des Anspruchs 1 gelöst. Der Kern der Erfindung besteht darin, dass eine gezielt ineffiziente Nutzung einer Dehydrierreaktion zur Freisetzung von Wasserstoffgas die Reduzierung eines Gesamtbauraums für eine Vorrichtung zum Bereitstellen von Wasserstoffgas ermöglicht. Als Gesamtbauraum der Vorrichtung wird der Bauraum für eine Speichereinheit und für eine Entladeeinheit verstanden. Erfindungsgemäß kann der Gesamtbauraum auf höchstens75 %, insbesondere auf höchstens 70 %, insbesondere höchstens 60 %, insbesondere höchstens 50 %, insbesondere höchstens 40 %, insbesondere höchstens 30 %, insbesondere höchstens 25 %, insbesondere höchstens 20 % und insbesondere höchstens 15 % des theoretischen Bauraumbedarfs reduziert werden, der für eine vollständige Dehydrierreaktion bei sonst identischen Verfahrensbedingungen erforderlich wäre. Die Dehydrierreaktion findet in mindestens einem Dehydrierreaktor der Entladeeinheit statt. Wasserstoffgas, das chemisch gebunden an einem Wasserstoffträgermedium dem Dehydrierreaktor zugeführt wird, wird in Folge der Dehydrierreaktion freigesetzt. Das zumindest teilweise mit Wasserstoff beladene Wasserstoffträgermedium weist einen ersten Hydriergrad auf. In Folge der Dehydrierreaktion in dem Dehydrierreaktor wird Wasserstoffgas von dem Wasserstoffträgermedium freigesetzt. Das verbleibende Wasserstoffträgermedium weist einen zweiten Hydriergrad auf, der kleiner ist als der erste Hydriergrad. Ein Hydriergrad von 100 % bedeutet, dass das Wasserstoffträgermedium vollständig mit Wasserstoffgas beladen ist. Diese theoretisch vollständige Beladung tritt in der Realität praktisch nicht auf. Typischerweise liegt das beladene Wasserstoffträgermedium mit einem Hydriergrad zwischen 95 % und 98 % vor. Ein Hydriergrad von 0 % bedeutet, dass das Wasserstoffträgermedium vollständig entladen ist. Das Wasserstoffträgermedium ist insbesondere ein flüssiges Wasserstoffträgermedium und insbesondere ein flüssiges organisches Wasserstoffträgermedium, das auch als Liquid Organic Hydrogen Carrier (LOHC) bekannt ist. Eine vollständige Dehydrierung bedeutet also eine Freisetzung von Wasserstoffgas von beladenem LOHC mit einem von Null verschiedenen Hydriergrad bis zu einer vollständigen Entladung des LOHC mit einem Hydriergrad von 0 %.

Die Dehydrierung des LOHC ist eine katalytische Reaktion aus einem organischen Molekül oder einer Mischung organischer Moleküle. Die Freisetzung des Wasserstoffs erfolgt durch eine stoffliche Umwandlung des beladenen Wasserstoffträgermediums (LOHC-H) durch Entladung in dem mindestens einen Dehydrierreaktor der Entladeeinheit mittels katalytischer Dehydrierreaktion. Neben dem freigesetzten Wasserstoffgas resultiert zumindest teilweise entladendes Wasserstoffträgermedium (LOHC-D). Im beladenen Zustand ist das Wasserstoffträgermedium insbesondere eine gesättigte, polyzyklische Verbindung, insbesondere ein Perhydro-Dibenzyltoluol oder ein Perhydro-Benzyltoluol, die als Reinstoffe, isomere Gemische oder Mischungen untereinander verwendet werden können. Zusätzlich oder alternativ kann das beladene Wasserstoffträgermedium eine gesättigte, polyzyklische Verbindung, die Heteroatome wie Stickstoff oder Sauerstoff enthalten kann. Insbesondere ist das beladene Trägermedium Perhydro-N-Ethylcarbazol, Perhydro-N-Propylcarbazol, Perhydro-N-Isopropylcarbazol, Perhydro-N-Butylcarbazol oder Mischungen dieser Substanzen. Zusätzlich oder alternativ können als beladenes Wasserstoffträgermedium auch ein gesättigtes organisches Oligomer oder Polymer verwendet werden, die sich durch katalytische Dehydrierung in Oligomere oder Polymere mit ausgedehntem π-konjugierten Elektronensystemen umsetzen lassen.

Die Dehydrierreaktion des zumindest teilweise beladenen Wasserstoffträgermediums in dem Dehydrierreaktor erfolgt bei einer Prozesstemperatur zwischen 100 °C und 450 °C, insbesondere zwischen 150 °C und 420 °C und insbesondere zwischen 180 °C und 390 °C. Der Prozessdruck liegt zwischen 0,1 und 30 bar, insbesondere zwischen 1 und 10 bar. Für die Dehydrierreaktion wird ein Katalysator, insbesondere ein metallischer Katalysator, eingesetzt, der insbesondere Platin, Palladium, insbesondere Metalle wie Chrom, Eisen, Kobalt, Nickel, Kupfer, Iridium und/oder Ruthenium enthält. Wesentlich ist, dass der Katalysator geeignet ist, Wasserstoff, der vom beladenen Wasserstoffträgermedium abgegeben wird, als Wasserstoffgas freizusetzen.

Als Differenz aus dem ersten Hydriergrad und dem zweiten Hydriergrad ergibt sich ein sogenannter Dehydrierhub, der maßgeblich für die Effizienz der Dehydrierreaktion ist. Als Effizienz der Dehydrierreaktion ist hier die Ausnutzung der Speicherkapazität des Wasserstoffträgermediums zu verstehen. Ein Wasserstoffspeicherverfahren ist umso effizienter, je mehr Wasserstoffgas gespeichert und wieder freigesetzt werden kann. Je größer der Dehydrierhub ist, desto mehr Wasserstoffgas wird bei der Dehydrierreaktion freigesetzt und kann für folgende Anwendungen genutzt werden.

Der Erfindung liegt die Erkenntnis zugrunde, dass der erforderliche Bauraum für den Speicherbehälter und der erforderliche Bauraum für den Dehydrierreaktor von dem Dehydrierhub, mit dem die Vorrichtung zum Bereitstellen von Wasserstoffgas betrieben wird, abhängt. Je größer der Dehydrierhub, desto größer ist der erforderliche Bauraum für den Dehydrierreaktor. Das chemische Potenzial des beladenen Wasserstoffträgermediums ist beim Eintritt in den Dehydrierreaktor maximal und sinkt mit fortschreitendem Ablauf der Dehydrierreaktion. Im Fall eines Dehydrierreaktors mit einem Strömungsrohr ist die Reaktionsrate am Eintritt in den Dehydrierreaktor maximal und sinkt bis zum Austritt aus dem Dehydrierreaktor exponentiell auf ein Minimum ab. Es wurde erkannt, dass der Dehydrierreaktor in mehrere Reaktionszonen eingeteilt werden kann, wobei in ersten Zonen, die im Bereich des Eintritts in den Dehydrierreaktor angeordnet sind, die Dehydrierreaktion sehr produktiv und effektiv verläuft. In den letzten Zonen, die im Bereich des Austritts aus dem Dehydrierreaktor angeordnet sind, verläuft die Dehydrierreaktion vergleichsweise unproduktiv und ineffizient.

Erfindungsgemäß wurde auch erkannt, dass es im Sinne einer Gesamtwirtschaftlichkeitsbetrachtung und insbesondere mit Blick auf die Bauraumoptimierung der Vorrichtung vorteilhaft ist, vorrangig und insbesondere ausschließlich die Zonen des Dehydrierreaktors mit einer verhältnismäßig hohen Reaktionsrate zu nutzen. Das bedeutet, dass in dem Dehydrierreaktor ausschließlich Reaktionsraum für Zonen ist, in welchen die Dehydrierreaktion mit der verhältnismäßig hohen Reaktionsrate durchgeführt wird. Als verhältnismäßig hohe Reaktionsrate wird eine Reaktionsrate verstanden, die mindestens doppelt so groß ist, insbesondere mindestens fünfmal so groß, insbesondere mindestens zehnmal so groß wie die Reaktionsrate, die sich gemittelt über den Umsatzbereich von 90 % bis 99 % einstellt.

Bauraum für die letzten Zonen, in welchen die Dehydrierreaktion unproduktiv ist, ist nicht erforderlich, da auf diese Zonen gezielt verzichtet wird. Dadurch kann das Bauvolumen, also der Bauraum für den Dehydrierreaktor, insbesondere die Länge des Strömungsrohres, verringert werden. Daraus resultiert auch eine eingeschränkte, also reduzierte, Dehydrierung mit verminderter Ausbeute von Wasserstoffgas. Der verminderte Umsatz von beladenem Wasserstoffträgermedium zu Wasserstoffgas bewirkt die gezielt ineffiziente Nutzung der Dehydrierung.

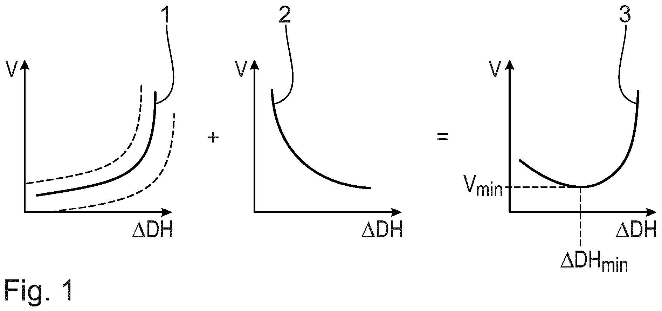

Für den Speicherbehälter gilt, dass das erforderliche Tankvolumen, also das LOHC-Volumen, steigt, wenn der Dehydrierhub reduziert ist. Damit ergeben sich für den jeweils erforderlichen Bauraum für den Dehydrierreaktor einerseits und den Speicherbehälter andererseits gegenläufige Anforderungen an den Dehydrierhub zur Bauraumminimierung. Diese Zusammenhänge sind schematisch in Fig. 1 dargestellt. Es wurde erkannt, dass die Einzelanforderungen an den Bauraum für Dehydrierreaktor und Speicherbehälter überlagert und daraus eine Optimierungsaufgabe derart formuliert werden kann, so dass der Gesamtbauraum für die Speichereinheit und für die Entladeeinheit in Abhängigkeit des Dehydrierhubes ein Minimum aufweist. Der zugehörige Dehydrierhub wird als optimaler Dehydrierhub bezeichnet. Bei dem optimalen Dehydrierhub weist die Vorrichtung einen minimalen Gesamtbauraum auf. Der Dehydrierhub ist also optimal bezogen auf eine kleinbauende Vorrichtung. Der optimale Dehydrierhub ist nicht optimal, also nicht maximal, bezogen auf die Wasserstoffausbeute. Zusätzlich existiert ein Bereich optimalen Dehydrierhubes, indem der Dehydrierhub maximal 10 % oberhalb des optimalen Dehydrierhubes, insbesondere maximal 15 %, insbesondere maximal 20 %, insbesondere maximal 25 % und insbesondere maximal 50 %, über dem optimalen Dehydrierhub liegt.

Der optimale Dehydrierhub ergibt sich insbesondere daraus, dass die Dehydrierreaktoren ausschließlich in den Zonen mit hoher Reaktionsrate, in sogenannten produktiven Zonen, betrieben werden.

Der optimale Dehyrierhub ist eine regelbare Größe. Der optimale Dehydrierhub ist insbesondere eine zeitlich veränderliche Größe. Das bedeutet, dass das Verfahren mit verschiedenen Werten für den Dehydrierhub betrieben werden kann, wobei die verschiedenen Werte kontinuierlich, insbesondere linear oder gemäß einer anderen Funktionsvorschrift, oder gestuft, also unstetig übergehen können. Es ist denkbar, dass der optimale Dehydrierhub während des Verfahrens konstant gehalten wird.

Insbesondere unterscheidet sich der erfindungsgemäße Ansatz zur Reduzierung des Gesamtbauraums von Speichereinheit und Entladeeinheit von bisher aus dem Stand der Technik bekannten Ansätzen zur Bauraumoptimierung, die insbesondere auf die kompakte Bauweise durch Vermeiden von Leervolumina, also der Erhöhung des Packagings, die Steigerung der Produktivität der Katalysatoren und/oder Erhöhung der Dehydrierumsätze zur Reduzierung des LOHC-Tankvolumens gerichtet sind. Die erfindungsgemäße Vorrichtung ist für mobile Anwendungen geeignet, insbesondere für sogenannte LOHC-Fahrzeuge, die mit LOHC-H beladen werden und eine Onboard-Dehydrierung stattfindet.

Dadurch, dass die Dehydrierung in dem Dehydrierreaktor ausschließlich innerhalb der effektiven Zonen des Dehydrierreaktors bei hohen Reaktionsraten betrieben wird, verringert sich die Menge an erforderlichem Katalysatormaterial gegenüber aus dem Stand der Technik bekannten Verfahren. Aufgrund der kleineren Baugröße des Dehydrierreaktors resultiert eine geringere Verweilzeit des Wasserstoffträgermediums im Dehydrierreaktor. Dadurch verringert sich die Bildung von Zersetzungsprodukten, so dass die Zyklenstabilität des Wasserstoffträgermediums steigt und der Grad der Verunreinigungen im Wasserstoffstrom sinkt. Mit dem erfindungsgemäßen Verfahren ist eine verbesserte Reinheit des Wasserstoffstroms möglich.

Berechnungen der Anmelderin haben gezeigt, dass ausgehend von einem Dehydrierhub von 85% als Bezugswert signifikante Reduzierungen der Masse des Katalysatormaterials und der Verweilzeit des Wasserstoffträgermediums im Dehydrierreaktor erreicht werden (vgl. Tabelle 1).

**Tabelle 1**

| | | | | | | | | |
|---|---|---|---|---|---|---|---|---|
| Dehydrierhub | 85% (Bezugswert) | 80% | 70% | 60% | 50% | 40% | 30% | 20% |
| Reduzierung der Masse des Katalysatormaterials | 0% | 19% | 39% | 50% | 56% | 61% | 65% | 68% |
| Reduzierung der Verweilzeit | 0% | 6% | 18% | 30% | 42% | 54% | 66% | 78% |

Das erfindungsgemäße Verfahren wird mit mehreren Dehydrierreaktoren betrieben, wobei es besonders vorteilhaft ist, wenn sehr viele, insbesondere mindestens 80 % aller Reaktoren, insbesondere mindestens 90 % aller Reaktoren, insbesondere alle Reaktoren bis auf einen und insbesondere sämtliche Reaktoren, gleichzeitig betrieben werden. Es wurde gefunden, dass in Abhängigkeit des Lastzustands, also der Soll-Freisetzungsrate von Wasserstoffgas, die Reaktoren flexibel miteinander verschaltet werden können. Vorteilhaft ist es, wenn die Dehydrierreaktoren seriell und/oder parallel betrieben werden. Dadurch ergibt sich insbesondere eine vorteilhafte, effiziente Nutzung der Reaktorkapazitäten gegenüber der WO 2017/102 285 A1. Ein Abschalten einzelner Reaktoren ist entbehrlich. Dadurch, dass sämtliche Reaktoren ständig in Betrieb sind, werden diese auf Betriebstemperatur gehalten. Ein Wieder-Erwärmen der Reaktoren auf Betriebstemperatur entfällt. Diese Betriebsweise ist besonders wirtschaftlich. Es wurde gefunden, dass die Gesamtenergiebilanz des Verfahrens verbessert und/oder der maximale Bauraumbedarf verringert ist, wenn sämtliche Reaktoren stets bei gleichen Reaktionsbedingungen, also Reaktionsdruck und/oder Reaktionstemperatur, betrieben werden. Der Reaktionsdruck und/oder die Reaktionstemperatur in den Reaktoren, die ausschließlich seriell verschaltet sind, können direkt geregelt werden, sodass identische Reaktionsbedingungen unmittelbar einstellbar sind. Dadurch ergibt sich ein Vorteil gegenüber der Betriebsweise von Dehydrierreaktoren gemäß der WO 2015/061 215 A2, gemäß der die Reaktionsbedingungen in den Dehydrierreaktoren gezielt unterschiedlich eingestellt sind, um eine höhere Reaktionsrate zu erzielen. Dies führt zu einer besonders groß bauenden Vorrichtung.

Mehrere Dehydrierreaktoren ermöglichen eine flexible Betriebsweise der Vorrichtung. Die Dehydrierreaktoren werden in Abhängigkeit einer Lastanforderung, also dem Bedarf an freigesetztem Wasserstoffgas, in einer Parallel- und/oder in einer Reihenanordnung miteinander verbunden.

Zum Verbinden der Dehydrierreaktoren miteinander sind entsprechende Fluidleitungen vorgesehen, die über entsprechende Ventile und Weichen miteinander verbindbar sind, so dass beispielsweise in einer ersten Schaltstellung eines Ventils zwei Reaktoren in Parallelanordnung und bei einer anderen Schaltstellung des Ventils die Dehydrierreaktoren in Reihenanordnung miteinander verbunden sind.

Ein wesentlicher Vorteil der Verschaltung der Dehydrierreaktoren miteinander besteht darin, dass die Dehydrierreaktoren ständig in Betrieb sind. Ein Wiederaufheizen auf Betriebstemperatur ist nicht erforderlich. Es ist insbesondere denkbar, dass sämtliche Dehydrierreaktoren ausschließlich parallel oder ausschließlich seriell verschaltet sind. Es sind auch gemischte Verschaltungen möglich.

Mehrere Speicherbehälter ermöglichen ein flexibles und effizientes Speichern des Wasserstoffträgermediums, insbesondere bei gleichem oder unterschiedlichem Hydriergrad.

Ein Verfahren gemäß Anspruch 2 gewährleistet die gezielte und effektive Bauraumoptimierung unter Akzeptanz eines bezüglich der Freisetzungsrate reduzierten Dehydrierhubes, der aber für die Minimierung des Gesamtbauraums optimal ist.

Ein Verfahren gemäß Anspruch 3 ermöglicht die Bestimmung des optimalen Dehydrierhubes während der Durchführung des Verfahrens, insbesondere in situ.

Ein Verfahren gemäß Anspruch 4 ermöglicht eine Anpassung des optimalen Dehydrierhubes während des Verfahrens, insbesondere bei veränderten Leistungsanforderungen.

Ein Verfahren gemäß einem der Ansprüche 5 bis 6 ermöglicht eine gezielte Bauraumreduzierung in Abhängigkeit des jeweiligen Hydriergrades bzw. des optimalen Dehydrierhubes.

Ein Aufreinigungsapparat zum Aufreinigen des freigesetzten Wasserstoffgases ermöglicht die Bereitstellung von Wasserstoffgas mit erhöhter Reinheit.

Ein Heizkreislauf mit mindestens einem Wasserstoffbrenner dient zum Bereitstellen von Wärme für den Dehydrierreaktor und ermöglicht eine effiziente Nutzung der Vorrichtung und einen energiereduzierten Betrieb. Der Aufwand für die Bereitstellung zusätzlicher Wärme ist reduziert.

Eine Regelungseinheit zum Regeln des optimalen Dehydrierhubes während des Betriebs der Vorrichtung ermöglicht ein Eingreifen in die Betriebsweise der Vorrichtung und insbesondere eine Anpassung des Hydrierhubes.

Eine Messeinheit zum Messen eines physikalischen und/oder chemischen Kennwertes des Wasserstoffträgermediums und/oder des freigesetzten Wasserstoffgases ermöglicht die Bestimmung des Hydriergrades des beladenen und/oder des unbeladenen Wasserstoffträgermediums. Der Hydriergrad kann beispielsweise aus der Dichte oder anderen physikalischen und/oder chemischen Kennwerten des Wasserstoffträgermediums bestimmt werden. Es ist auch möglich, die Menge des freigesetzten Wasserstoffgases zu bestimmen, um in Kenntnis des Hydriergrades für das beladene Wasserstoffträgermedium auf den Hydriergrad des teilweise entladenen Wasserstoffträgermediums rückzuschließen. Die Messeinheit dient insbesondere zum Bestimmen des ersten Hydriergrads und des zweiten Hydriergrads, also zur Überwachung des Dehydrierhubes. Die mit der Messeinheit gemessenen Kennwerte dienen insbesondere als Eingangsgrößen für die Regelungseinheit. Es ist insbesondere möglich, die Verfahrensparameter wie beispielsweise Prozessdruck und/oder Prozesstemperatur über die Regelungseinheit entsprechend anzupassen. Die Menge des freigesetzten Wasserstoffs kann als Volumenstrom bestimmt werden mit einem thermischen Massendurchflussmessgerät. Alternativ können Coriolis-Durchflussmesser verwendet werden, um die Volumenströme des beladenen und des unbeladenen Wasserstoffträgermediums zu bestimmen.

Eine Anlage zur Bereitstellung von Energie weist eine Vorrichtung und eine Wandlungseinheit auf. Die Wandlungseinheit dient zum Wandeln des freigesetzten Wasserstoffgases in, insbesondere elektrische, Energie. Die Wandlungseinheit ist insbesondere eine Brennstoffzelle, insbesondere eine Festoxidbrennstoffzelle (SOFC), insbesondere eine metallische Festoxidbrennstoffzelle (mSOFC). Die Wandlungseinheit kann alternativ auch einen Wasserstoffverbrennungsmotor aufweisen. Die Vorrichtung wird auch als LOHC-System bezeichnet, das die Entladeeinheit und die Speichereinheit umfasst. Die Anlage, die das LOHC-System und die Wandlungseinheit umfasst, wird auch als LOHC-Strang bezeichnet.

Eine Anlage , bei der die Wandlungseinheit eine Batterie und/oder einen Elektromotor aufweist, eignet sich für den Einsatz in einem LOHC-Fahrzeug, wobei der Elektromotor dazu dient, die von der Brennstoffzelle bereitgestellte elektrische Energie in mechanische Antriebsenergie für das Fahrzeug zu wandeln.

Sowohl die in den Patentansprüchen angegebenen Merkmale als auch die in den nachfolgenden Ausführungsbeispielen der Vorrichtung angegebenen Merkmale sind jeweils für sich alleine oder in Kombination miteinander geeignet, den erfindungsgemäßen Gegenstand, der im Anspruch 1 und den abhängigen Ansprüchen 2-6 definiert ist, weiterzubilden. Die jeweiligen Merkmalskombinationen stellen hinsichtlich der Weiterbildungen des Erfindungsgegenstands keine Einschränkung dar, sondern weisen im Wesentlichen lediglich beispielhaften Charakter auf.

Weitere Merkmale, Vorteile und Einzelheiten der Erfindung ergeben sich aus der nachfolgenden Beschreibung von Ausführungsbeispielen anhand der Zeichnung. Es zeigen:
- Fig. 1: eine schematische Darstellung der funktionalen Abhängigkeiten von Bauraum und Dehydrierhub für eine Speichereinheit, einen Dehydrierreaktor und eine Vorrichtung umfassend einen Speicherbehälter und einen Dehydrierreaktor,
- Fig. 2: eine schematische Darstellung einer Vorrichtung gemäß einem ersten Ausführungsbeispiel,
- Fig. 3: eine Fig. 2 entsprechende Darstellung einer Vorrichtung gemäß einem zweiten Ausführungsbeispiel,
- Fig. 4: eine Fig. 2 entsprechende Darstellung einer Vorrichtung gemäß einem dritten Ausführungsbeispiel,
- Fig. 5: eine Fig. 2 entsprechende Darstellung einer Vorrichtung gemäß einem vierten Ausführungsbeispiel,
- Fig. 6: eine Fig. 2 entsprechende Darstellung einer Vorrichtung gemäß einem fünften Ausführungsbeispiel mit mehreren Speicherbehältern und mehreren Dehydrierreaktoren,
- Fig. 7: eine Darstellung der Vorrichtung gemäß Fig. 6 im Betrieb mit einer Grundlast,
- Fig. 8: eine Fig. 7 entsprechende Darstellung der Anlage im Betrieb mit einer Spitzenlast, und
- Fig. 9: eine Fig. 2 entsprechende Darstellung einer Vorrichtung gemäß einem sechsten Ausführungsbeispiel mit einer metallischen SOFC im LOHC-Strang.

Fig. 1 zeigt die Abhängigkeit des erforderlichen Bauraums, also des Volumens V, in Abhängigkeit des Dehydrierhubes ΔDH als Kennlinie 1 für eine Entladeeinheit mit einem Dehydrierreaktor und als Kennlinie 2 für eine Speichereinheit mit einem Speicherbehälter. Wie vorstehend erläutert nimmt das Volumen V bei der Entladeeinheit mit steigendem Dehydrierhub ΔDH überproportional zu. Das Volumen V der Speichereinheit nimmt mit steigendem Dehydrierhub überproportional ab. Eine Summenkennlinie 3, die das Volumen V, also den Gesamtbauraum, für die Speichereinheit und die Entladeeinheit repräsentiert, weist ein Minimum auf, das den minimalen Dehydrierhub ΔDHₘᵢₙ vorgibt. Bei dem minimalen Dehydrierhub ΔDHₘᵢₙ ist das Volumen Vₘᵢₙ, also der Gesamtbauraum, minimal.

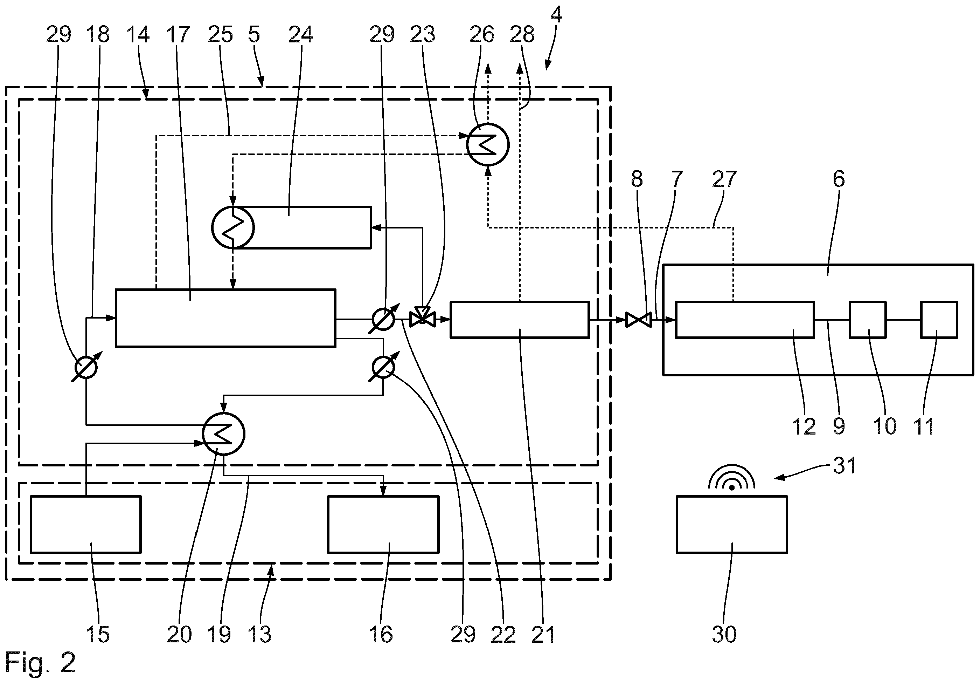

Nachfolgend wird anhand von Fig. 2 nicht erfindungsgemäßes ein erstes Ausführungsbeispiel einer Anlage 4 zur Bereitstellung von Energie näher erläutert. Die Anlage 4 umfasst eine Vorrichtung 5 zum Bereitstellen von Wasserstoffgas sowie eine mit der Vorrichtung 5 verbundene Wandlungseinheit 6 zum Wandeln des freigesetzten Wasserstoffgases in Energie. Die Wandlungseinheit 6 weist eine Brennstoffzelle 12 auf. Die Wandlungseinheit 6 gemäß dem gezeigten Ausführungsbeispiel dient zur Wandlung von Wasserstoffgas in mechanische Energie. Die Wandlungseinheit 6 ist mit der Vorrichtung 5 über eine Wasserstoffgas-Leitung 7 verbunden, entlang der ein Absperrventil 8 angeordnet ist. Die Brennstoffzelle 12 ist über eine elektrische Leitung 9 mit einer elektrischen Batterie 10 und einem daran angeschlossenen Elektromotor 11 verbunden. Der Elektromotor 11 ist beispielsweise ein Antriebsmotor für ein Fahrzeug. Die Anlage 4 ist für den mobilen Einsatz in einem Fahrzeug geeignet.

Die Wandlungseinheit 6 umfasst die Batterie 10, den Elektromotor 11 und die Brennstoffzelle 12.

In einem weiteren, nicht dargestellten Ausführungsbeispiel kann die Wandlungseinheit 6 anstelle einer Brennstoffzelle einen Wasserstoffgas-Verbrennungsmotor aufweisen. Entsprechend ist bei einer derartigen Wandlungseinheit weder eine Batterie noch ein Elektromotor erforderlich. Anstelle der Brennstoffzelle 12 kann auch ein Wasserstoffgasverbrennungsmotor mit einem Generator zur Stromerzeugung eingesetzt werden. Die Batterie 10 und der Elektromotor 11 bleiben in diesem Fall erhalten.

Die Vorrichtung 5 umfasst eine Speichereinheit 13 und eine damit verbundene Entladeeinheit 14. Die Speichereinheit 13 weist einen ersten Speicherbehälter 15 zum Speichern von beladenem Wasserstoffträgermedium LOHC-H und einen zweiten Speicherbehälter 16 zum Speichern von zumindest teilweise entladenem Wasserstoffträgermedium LOHC-D auf.

Die Entladeeinheit 14 weist einen Dehydrierreaktor 17 auf, der mit dem ersten Speicherbehälter 15 über eine Zuführleitung 18 verbunden ist. Über eine Abführleitung 19 ist der Dehydrierreaktor 17 mit dem zweiten Speicherbehälter 16 verbunden. Die Zuführleitung 18 und die Abführleitung 19 sind in einem ersten Wärmetauscher 20 zusammengeführt. Der erste Wärmetauscher 20 dient zum Vorwärmen des beladenen Wasserstoffträgermediums LOHC-H in der Zuführleitung 18 mit Abwärme aus der Abführleitung 19 des zumindest teilweise entladenen Wasserstoffträgermediums LOHC-D.

Der Dehydrierreaktor 17 ist über eine Wasserstoffgasleitung 22 mit einem Aufreinigungsapparat 21 verbunden. An den Aufreinigungsapparat 21 ist die Wasserstoffgas-Leitung 7 angeschlossen, die die Wandlungseinheit 6 mit der Vorrichtung 5 verbindet. Entlang der Wasserstoffleitung 22 zwischen dem Dehydrierreaktor 17 und dem Aufreinigungsapparat 21 ist ein Abzweigventil 23 vorgesehen, um zumindest einen Teil und/oder zumindest zeitweise das in dem Dehydrierreaktor 17 freigesetzte Wasserstoffgas einem Wasserstoffbrenner 24 zuzuführen. Die Entladeeinheit 14 weist ferner einen Heizkreislauf 25 auf, wobei der Wasserstoffbrenner 24 Bestandteil des Heizkreislaufs 25 ist. Der Heizkreislauf 25 umfasst eine geschlossene Rohrleitung, die an dem Dehydrierreaktor 17 angeschlossen ist, um diesen mit Wärme für die Dehydrierreaktion zu versorgen. Die geschlossene Ringleitung ist an einen zweiten Wärmetauscher 26 angeschlossen und von dort über den Wärmerekuperator 24 zu dem Dehydrierreaktor 17 zurückgeführt.

An den zweiten Wärmetauscher 26 ebenfalls angeschlossen ist eine Abgasleitung 27 der Brennstoffzelle 12.

Der Aufreinigungsapparat 21 weist eine Gas-/Abwärmeleitung 28 auf, mit der Gas und/oder Abwärme an die Umgebung abgegeben werden kann.

Die Vorrichtung 5 weist ferner Messeinheiten 29, die zum Messen eines physikalischen und/oder chemischen Kennwertes des beladenen Wasserstoffträgermediums LOHC-H, des unbeladenen Wasserstoffträgermediums LOHC-D und/oder des freigesetzten Wasserstoffgases H₂ dienen.

Die Vorrichtung 5 umfasst ferner eine Regelungseinheit 30, die insbesondere mit dem Dehydrierreaktor 17, den Messeinheiten 29 und der Wandlungseinheit 6 in Signalverbindung steht. Gemäß dem gezeigten Ausführungsbeispiel ist die Signalverbindung der Regelungseinheit mit den vorstehend genannten Komponenten kabellos ausgeführt und durch die kabellose Signalverbindung charakterisierendes Symbol 31 dargestellt. Die Signalverbindung kann auch kabelgebunden ausgeführt sein.

Nachfolgend wird der Betrieb der Anlage 4 näher erläutert. Zum Bereitstellen von Wasserstoffgas wird beladenes Wasserstoffträgermedium LOHC-H aus dem ersten Speicherbehälter 15 in den Dehydrierreaktor 17 über die Zuführleitung 18 zugeführt. Das zugeführte LOHC-H weist einen ersten Hydriergrad hi von mindestens 90 % auf. In dem Dehydrierreaktor 17 findet die Dehydrierung des beladenen Wasserstoffträgermediums unter Freisetzung von Wasserstoffgas statt. Die Dehydrierung in dem Dehydrierreaktor 17 erfolgt bei einem Prozessdruck von 0,1 bar bis 30 bar und einer Prozesstemperatur von 100 °C bis 450 °C. Das entladene Wasserstoffträgermedium LOHC-D weist einen zweiten Hydriergrad h₂ auf, der mindestens 20 % beträgt. Das entladene Wasserstoffträgermedium LOHC-D wird über die Abführleitung 19 aus dem Dehydrierreaktor 17 dem zweiten Speicherbehälter 16 zugeführt. In dem ersten Wärmetauscher 20 wird das beladene Wasserstoffträgermedium LOHC-H von dem entladenen Wasserstoffträgermedium LOHC-D vorgewärmt.

Das in dem Dehydrierreaktor 17 freigesetzte Wasserstoffgas verlässt den Dehydrierreaktor 17 über die Wasserstoffgasleitung 22, wobei zumindest ein Teil des Wasserstoffgases an einem Abzweigventil 23 abgezweigt und dem Wasserstoffbrenner 24 zugeführt wird. Über die vom Wasserstoffbrenner 24 erzeugte Wärme kann der Dehydrierreaktor 17 über den Heizkreislauf 25 zusätzlich erwärmt werden. Darüber hinaus wird der Heizkreislauf 25 in dem zweiten Wärmetauscher 26 mit Abwärme aus der Brennstoffzelle 12 versorgt.

Der Anteil des Wasserstoffgases, der nicht zur Wärmerückgewinnung vorgesehen ist, wird in dem Aufreinigungsapparat 21 aufgereinigt, also von Verunreinigungen gesäubert. Der gereinigte Wasserstoffgasstrom wird über die Wasserstoffgas-Leitung 7 der Wandlungseinheit 6, insbesondere der Brennstoffzelle 12, zugeführt. In der Brennstoffzelle 12 wird das Wasserstoffgas mit Sauerstoffgas in elektrische Energie und Wasser gewandelt. Die in der Brennstoffzelle 12 erzeugte Abwärme kann über die Abgasleitung 27 abgeführt werden. Die in der Brennstoffzelle 12 erzeugte elektrische Energie wird in der Batterie 10 zwischengespeichert und von dem Elektromotor 11 für den Antrieb des Fahrzeugs genutzt.

Um den zur Verfügung gestellten Bauraum optimal auszunutzen, wird das Verfahren zum Freisetzen von Wasserstoffgas, insbesondere die Dehydrierreaktion in dem Dehydrierreaktor 17, überwacht. Insbesondere dienen die Messeinheiten 29, um die Stoffströme von LOHC-H, LOHC-D und/oder H₂, insbesondere kontinuierlich, zu überwachen und zu analysieren.

Insbesondere dienen die Messergebnisse aus den Messeinheiten 29 als Eingangsdaten für die Regelung des Dehydrierhubes ΔDH.

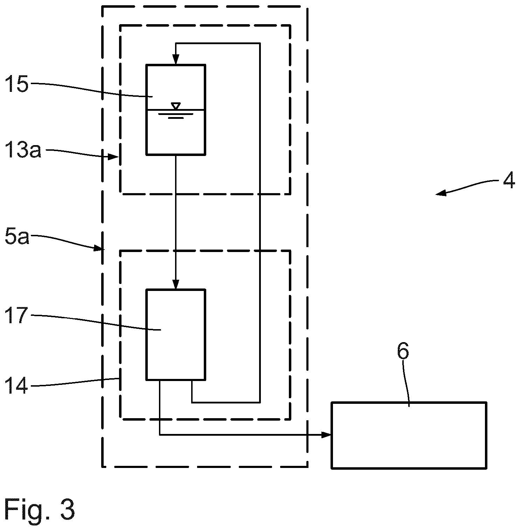

Im Folgenden wird unter Bezugnahme auf Fig. 3 ein zweites nicht erfindungsgemäßes Ausführungsbeispiel beschrieben. Konstruktiv identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a.

Die in Fig. 3 gezeigte Vorrichtung 5a ist insbesondere für den Betrieb mitgeringem Dehydrierhub, insbesondere von maximal 50 %, vorgesehen und dafür geeignet. Die Speichereinheit 13a weist lediglich einen einzigen Speicherbehälter 15 auf. Die Speichereinheit 13a ist als Einkammer-Tanksystem ausgeführt.

Es wurde gefunden, dass die Ausführung der Speichereinheit 13a mit nur einem Speicherbehälter 15 möglich ist, da aufgrund der geringen Hydriergrad-Differenz zwischen dem LOHC-H und dem LOHC-D derart gering ist, dass aus verfahrenstechnischen Gründen eine Vermischung von LOHC-H mit LOHC-D unproblematisch ist. Die Mischung von LOHC-H und LOHC-D wird als LOHC-X bezeichnet. Dadurch, dass nur ein einziger Speicherbehälter 15 vorgesehen ist, ist der Gesamtbauraum zusätzlich verringert.

Der Dehydrierreaktor 17 kann gemäß diesem Ausführungsbeispiel besonders kleinbauend ausgeführt sein wegen des besonders geringen Dehydrierhubes. Das in dem Dehydrierreaktor 17 freigesetzte Wasserstoffgas wird der Wandlungseinheit 6 zugeführt. Die Vorrichtung 5a gemäß dem gezeigten Ausführungsbeispiel kann einen Aufreinigungsapparat 21 und/oder einen Heizkreislauf 25 aufweisen gemäß dem ersten Ausführungsbeispiel, auch wenn diese Komponenten in Fig. 3 nicht explizit dargestellt sind.

Das Verfahren zum Betreiben der Vorrichtung 5a weist den zusätzlichen Vorteil auf, dass aufgrund des geringen Dehydrierhubes, der eine geringe Verweilzeit des Wasserstoffträgermediums LOHC-X in dem Dehydrierreaktor 17 impliziert, die Tendenz zur Degradation des Wasserstoffträgermediums vermindert ist. Daraus ergeben sich zwei, insbesondere für mobile Anwendungen der Vorrichtung 5a betreffende Vorteile. Erstens durch die verminderte Bildung von Zersetzungsprodukten werden weniger unerwünschte, insbesondere leicht siedende Zersetzungsprodukte, mit dem Wasserstoffstrom aus dem Dehydrierreaktor 17 ausgetragen. Die Aufreinigung des Wasserstoffstroms in dem Aufreinigungsapparat kann damit verfahrenstechnisch einfacher und somit mit geringerem Bauraum realisiert werden. Zweitens wird die Zyklenstabilität des Wasserstoffträgermediums LOHC-X erhöht.

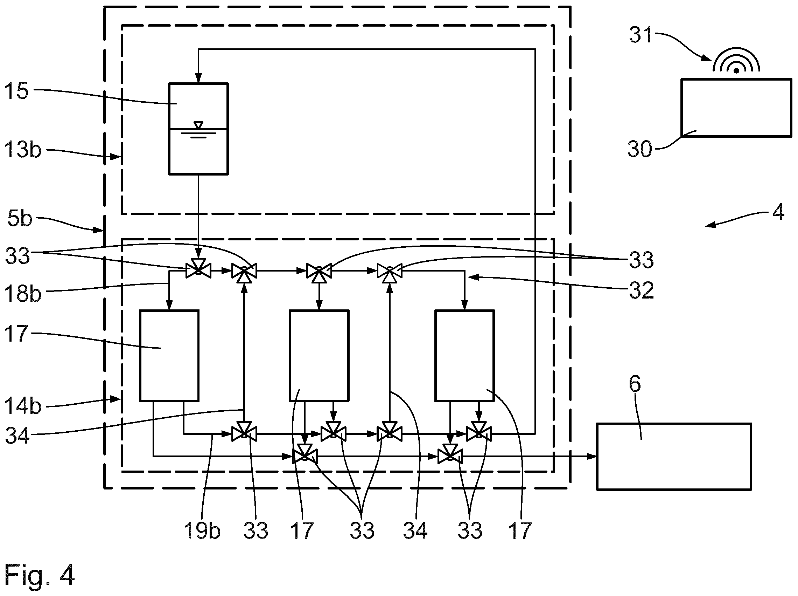

Im Folgenden wird unter Bezugnahme auf Fig. 4 ein drittes nicht erfindungsgemäßes Ausführungsbeispiel beschrieben. Konstruktiv identische Teile erhalten dieselben Bezugszeichen wie dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten b.

Der wesentliche Unterschied der Vorrichtung 5b gegenüber den vorherigen Ausführungsbeispielen besteht darin, dass die Entladeeinheit 14b mehrere Dehydrierreaktoren 17 aufweist. Die Dehydrierreaktoren 17 sind durch ein Leitungssystem 32 veränderlich miteinander verbindbar. Insbesondere in Abhängigkeit einer Leistungsanforderung eines Leistungsabnehmers, insbesondere eines Antriebsmotors der mobilen Einrichtung, also des Fahrzeugs, können die Dehydrierreaktoren 17 in einer Parallel- und/oder in einer Reihenanordnung miteinander verbunden sein. Das flexible Leitungssystem 32 gemäß der Entladeeinheit 14b weist eine Sammel-Zuführleitung 18b und eine Sammel-Abführleitung 19b auf. Über die Sammel-Zuführleitung 18b können die Dehydrierreaktoren 17 jeweils einzeln mit Wasserstoffträgermedium LOHC-X aus dem Speicherbehälter 15 der Speichereinheit 13b versorgt werden. Dafür sind jeweils ansteuerbare Ventile 33 vorgesehen. Die Ventile 33 sind insbesondere als Abzweigventile oder Umschaltventile ausgeführt. Zusätzlich sind Rückführleitungen 34 vorgesehen, die eine unmittelbare Rückführung von dehydriertem Wasserstoffträgermedium aus einem der Dehydrierreaktoren 17 über die Abführleitung 19b direkt zur Zuführleitung 18b für eine erneute und/oder weitere Dehydrierung im nachfolgenden Dehydrierreaktor 17 ermöglich.

Mit dem gezeigten Ausführungsbeispiel, gemäß dem in der Entladeeinheit 14b drei Dehydrierreaktoren 17 vorgesehen sind, ist es also möglich, eine Reihenschaltung der drei Dehydrierreaktoren 17 zu schalten, so dass das LOHC-X aus dem Speicherbehälter 15 zunächst in den in Fig. 4 links dargestellten Dehydrierreaktor 17 zugeführt und dort dehydriert wird. Das zumindest teilweise dehydrierte LOHC-X wird über die Abführleitung 19b, das erste entlang der Abführleitung 19b angeordnete Ventil 33 und die Rückführleitung 34 der Zuführleitung 18b zugeführt und anschließend dem zweiten Dehydrierreaktor 17, der in Fig. 4 in der Mitte angeordnet ist, zugeführt. Nach der Dehydrierung in dem zweiten Dehydrierreaktor 17 kann eine erneute Rückführung des dehydrierten Wasserstoffträgermediums LOHC-X in dem dritten, in Fig. 4 rechts dargestellten Dehydrierreaktor 17, erfolgen. Alternativ ist es auch möglich, den Fluidstrom von LOHC-X aus dem Speicherbehälter 15 auf die drei Dehydrierreaktoren 17 aufzuteilen, so dass eine parallele Dehydrierung des LOHC-X in den drei Dehydrierreaktoren 17 erfolgt. Es sind auch beliebige andere Anordnungen, die sich aus einer Kombination von Parallel- und Reihen-Anordnung ergeben, denkbar.

Gemäß dem gezeigten Ausführungsbeispiel kann die Vorrichtung 5b in Abhängigkeit der aktuellen Lastanforderung, also in Abhängigkeit des Soll-Umsatzes von beladenem Wasserstoffträgermedium in freigesetzten Wasserstoff, angepasst werden. Dazu werden die Dehydrierreaktoren 17 über die mit der Regelungseinheit 30 in Signalverbindung stehenden Ventile 33 veränderlich miteinander verschaltet. Insbesondere ist die Regelungseinheit 30 mit den Ventilen 33 über eine Funk-Signalverbindung 31 verbunden. Es ist auch eine kabellose Signalverbindung möglich.

Bei geringer Lastanforderung, also wenn eine vergleichsweise geringe Freisetzungsrate von Wasserstoffgas gefordert ist, werden die Dehydrierreaktoren 17 in Reihenschaltung betrieben. Damit kann ein hoher Dehydrierhub ΔDH von mindestens 70 % und insbesondere mindestens 80 % erreicht werden.

Durch mehrere Dehydrierreaktoren 17, die in Reihe geschaltet sind, ergibt sich eine insgesamt lange Verweilzeit für das Wasserstoffträgermedium.

Bei hoher Lastanforderung, also einer vergleichsweise großen Freisetzungsrate für Wasserstoffgas, werden die Dehydrierreaktoren 17 parallel betrieben, indem die Ventile 33 entsprechend die Dehydrierreaktoren 17 miteinander verschalten. Insgesamt wird ein reduzierter Dehydrierhub ΔDH von höchstens 60 %, insbesondere höchstens 55 % und insbesondere höchstens 50 % erzielt.

Dadurch, dass die Vorrichtung eine veränderliche Verschaltung der Dehydrierreaktoren 17 miteinander ermöglicht, können einerseits hohe Freisetzungsraten durch mehrere parallelgeschaltete Dehydrierreaktoren 17 abgebildet werden. Zudem kann das beladene Wasserstoffträgermedium bei einer Reihenschaltung tiefentladen werden.

Bei einer hohen Lastanforderung werden mindestens zwei, insbesondere alle Dehydrierreaktoren 17 parallel betrieben, so dass sich die Freisetzungsrate, also die Menge des freigesetzten Wasserstoffgases pro Zeiteinheit, additiv über die Dehydrierreaktoren 17 steigert.

Da jeder Dehydrierreaktor 17 nur für geringe Dehydrierhübe ausgelegt ist, ergibt sich ein vergleichsweise hoher Wert für den zweiten Hydriergrad h₂ in dem dehydrierten LOHC-D. Bei geringer Lastanforderung können die Dehydrierreaktoren 17 in Reihe geschalten und somit die Verweilzeit für das Wasserstoffträgermedium LOHC-X in dem jeweiligen Dehydrierreaktor erhöht werden. Daraus ergibt sich insgesamt ein höherer Dehydrierhub für die Vorrichtung 5b und die stoffliche Nutzung des im LOHC-X gespeicherten Wasserstoffs wird gesteigert.

Um eine Vorrichtung 5b bereitzustellen, die möglichst flexibel auf unterschiedliche Belastungen reagieren kann, ist es vorteilhaft, wenn die Entladeeinheit 14b mindestens einen Grundlast-Dehydrierreaktor 17 aufweist, der eine hohe Verweilzeit für das Wasserstoffträgermedium LOHC ermöglicht. Zusätzlich könnte mindestens ein Spitzenlast-Dehydrierreaktor 17 vorgesehen sein. Bei einer Grundlast kann der Spitzenlast-Dehydrierreaktor 17 in Reihe zu dem Grundlast-Dehydrierreaktor 17 angeordnet und geschaltet sein. Der Spitzenlast-Dehydrierreaktor 17 wird somit auf der erforderlichen Betriebstemperatur gehalten. Bei einer hohen Lastanforderung kann der Spitzenlast-Dehydrierreaktor 17 dann im parallelen Betrieb zu dem Grundlast-Dehydrierreaktor 17 geschaltet werden.

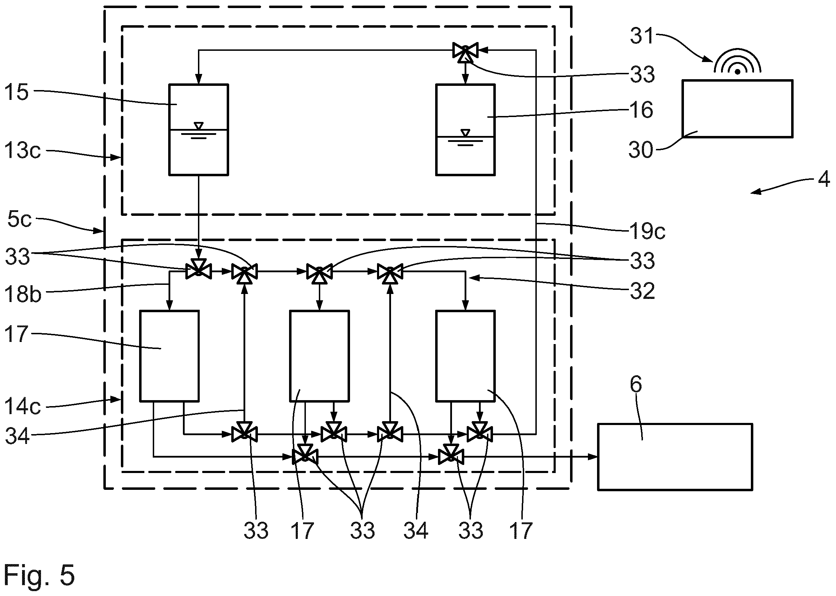

Im Folgenden wird unter Bezugnahme auf die Fig. 5 ein Ausführungsbeispiel der Erfindung beschrieben. Konstruktiv identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten c.

Die nicht erfindungsgemäße Vorrichtung 5c entspricht im Wesentlichen der Vorrichtung 5b gemäß dem dritten Ausführungsbeispiel. Ein wesentlicher Unterschied besteht darin, dass die Speichereinheit 13c als Zweikammer-Tanksystem ausgeführt ist mit einem ersten Speicherbehälter 15 und einem zweiten Speicherbehälter 16. Die Entladeeinheit 14c ist identisch mit der Entladeeinheit 14b gemäß dem dritten Ausführungsbeispiel.

Ziel der Speichereinheit 13c ist, dass in dem ersten Speicherbehälter 15 beladenes Wasserstoffträgermedium LOHC-H und teildehydriertes Wasserstoffträgermedium LOHC-X oder eine Mischung daraus gespeichert wird. Das entladene Wasserstoffträgermedium (LOHC-D) wird in dem zweiten Speicherbehälter 16 separat gespeichert. Die so ausgeführte Speichereinheit 13c weist den Vorteil auf, dass die Dehydrierreaktoren 17 ausschließlich Wasserstoffträgermedium in beladener Form LOHC-H und/oder in teildehydrierter Form LOHC-X zugeführt wird. Die Ausbeute und Effizienz der Dehydrierreaktionen in den Dehydrierreaktoren 17 ist verbessert. Entladenes Wasserstoffträgermedium LOHC-D wird insbesondere bei geringen Lastanforderungen der Vorrichtung 5c erzeugt, wenn die Dehydrierreaktoren 17 in einer Reihenschaltung angeordnet sind.

Um eine Aufteilung des Wasserstoffträgermediums auf die Speicherbehälter 15, 16 zu ermöglichen, ist ein weiteres ansteuerbares Ventil 33 innerhalb der Speichereinheit 13c vorgesehen. Es ist insbesondere denkbar, dass eine zusätzliche Messeinheit 29 vorgesehen ist, entlang der Abführleitung 19c, die also die Entladeeinheit 14c mit der Speichereinheit 13c verbindet. Mit dieser zusätzlichen Messeinheit kann der Hydriergrad des gerade aus der Entladeeinheit 14c zur Speichereinheit 13c rückgeführten Wasserstoffträgermediums bestimmt werden. In Abhängigkeit des bestimmten Hydriergrads kann das Wasserstoffträgermedium über das ansteuerbare Ventil 33 entweder dem ersten Speicherbehälter 15 oder dem zweiten Speicherbehälter 16 zugeführt werden.

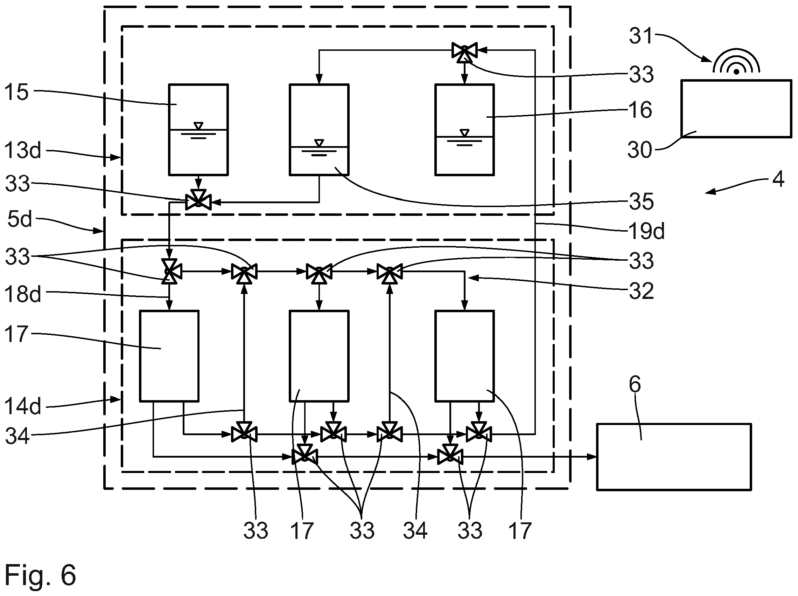

Im Folgenden wird unter Bezugnahme auf Fig. 6 bis 8 ein weiteres Ausführungsbeispiel der Erfindung beschrieben. Konstruktiv identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten d.

Die nicht erfindungsgemäße Vorrichtung 5d entspricht im Wesentlichen der Vorrichtung 5c gemäß dem vierten Ausführungsbeispiel, wobei die Speichereinheit 13c als Mehrkammertanksystem mit mindestens drei Speicherbehältern ausgeführt ist. Zusätzlich zu dem ersten Speicherbehälter 15 für beladenes Wasserstoffträgermedium LOHC-H und dem zweiten Speicherbehälter 16 für entladenes Wasserstoffträgermedium LOHC-D ist ein dritter Speicherbehälter 35 für zumindest teilweise entladenes Wasserstoffträgermedium LOHC-X vorgesehen. Dadurch ist es möglich, das Wasserstoffträgermedium LOHC in Abhängigkeit des jeweiligen Hydriergrades zielgerichtet abzuspeichern. Eine Vermengung, insbesondere eine unbeabsichtigte Vermengung von Teilströmen des Wärmeträgermediums unterschiedlichen Hydriergrads ist vermieden und insbesondere ausgeschlossen.

Gemäß dem gezeigten Ausführungsbeispiel in Fig. 6 ist der erste Speicherbehälter 15 für das beladene Wasserstoffträgermedium LOHC-H von der Abführleitung 19d, die von der Entladeeinheit 14d zurück in die Speichereinheit 13d führt, entkoppelt. Es ist ausgeschlossen, dass zumindest teilweise entladenes Wasserstoffträgermedium LOHC-X aus der Entladeeinheit 14d zurück in den ersten Speicherbehälter 15 gelangen kann. Die Aufteilung und Rückführung des entladenen Wasserstoffträgermediums LOHC-X und/oder LOHC-D erfolgt mittels des ansteuerbaren Ventils 33 in der Speichereinheit 13d. Die Dehydrierreaktoren 17 können effizienter betrieben werden.

Die Anzahl der Speicherbehälter kann beliebig gewählt werden. Je größer die Anzahl der Speicherbehälter ist, desto feiner ist eine Abstufung des zwischenzuspeichernden zumindest teilweise entladenen Wasserstoffträgermediums LOHC-X in Abhängigkeit seines Hydriergrads möglich. Je größer die Anzahl der Speicherbehälter ist, desto größer ist aber auch der integrale Gesamtbauraum.

Als besonders vorteilhaft hat sich eine Vorrichtung 5d erwiesen, bei der mehrere Dehydrierreaktoren 17 vorgesehen sind, wobei mindestens einer der Dehydrierreaktoren 17 für einen geringen Dehydrierhub ausgelegt ist. Diese Dehydrierreaktoren 17 werden mit einem Mehrkammertanksystem gemäß der Speichereinheit 13d kombiniert, das die vorübergehende Speicherung von Wasserstoffträgermedium mit unterschiedlichen Hydriergraden, also unterschiedlichen H₂-Restgehalten, separat voneinander ermöglicht. Besonders vorteilhaft ist es, wenn die Dehydrierreaktoren 17 jeweils bei identischen Reaktionsbedingungen, also Prozesstemperatur und Prozessdruck, betrieben werden, wobei lediglich die Auslegung der Dehydrierreaktoren, insbesondere die Länge der Dehydrierreaktoren, variiert wird.

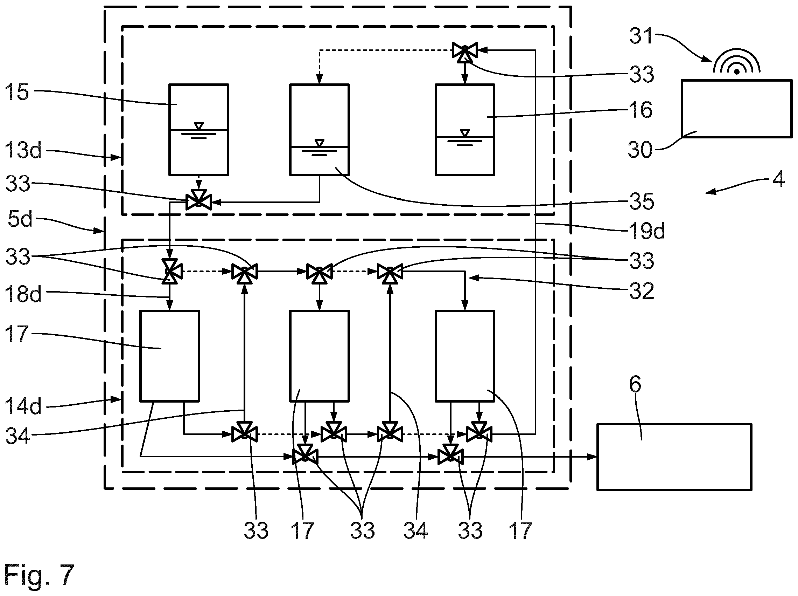

Nachfolgend wird anhand der Fig. 7 der Betrieb der Vorrichtung 5d gemäß Fig. 6 bei einer Grundlast erläutert. Die Dehydrierreaktoren 17 sind in Reihe geschalten. Dies ist in Fig. 7 dadurch angedeutet, dass die Parallelzweige an den Ventilen 33 gestrichelt dargestellt sind. Die Parallelzweige sind deaktiviert. In der Grundlastanordnung gemäß Fig. 7 wird vorzugsweise bereits teilweise entladenes Wasserstoffträgermedium LOHC-X aus dem dritten Speicherbehälter 35 für die Dehydrierung verwendet und anschließend im zweiten Speicherbehälter 16 abgespeichert.

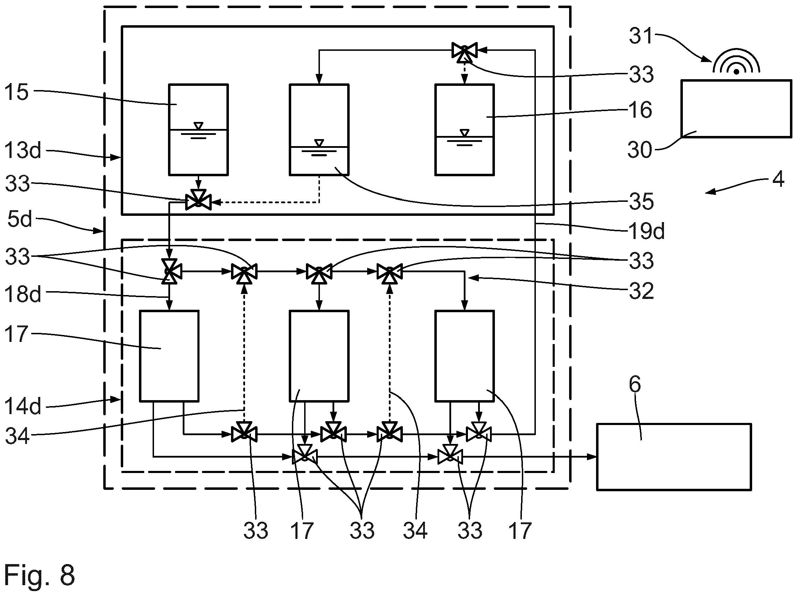

Der Betrieb der Vorrichtung 5d bei Spitzenlast ist in Fig. 8 dargestellt. Gemäß Fig. 8 wird insbesondere das vollständig beladene Wasserstoffträgermedium LOHC-H aus dem ersten Speicherbehälter 15 für die Dehydrierung genutzt. Die Dehydrierung findet parallel in den Dehydrierreaktoren 17 statt. Das rückgeführte, zumindest teilweise entladene Wasserstoffträgermedium LOHC-X wird in dem dritten Speicherbehälter 35 rückgeführt. Dadurch wird ein Reservoir in Spitzenlastsituationen geschaffen, das für den Betrieb bei Grundlast gemäß Fig. 7 zur weiteren Dehydrierung genutzt werden kann.

Für die veränderliche Verschaltung der Dehydrierreaktoren 17 miteinander dient die Regelungseinheit 30, die mit den Ventilen 33 in Signalverbindung steht.

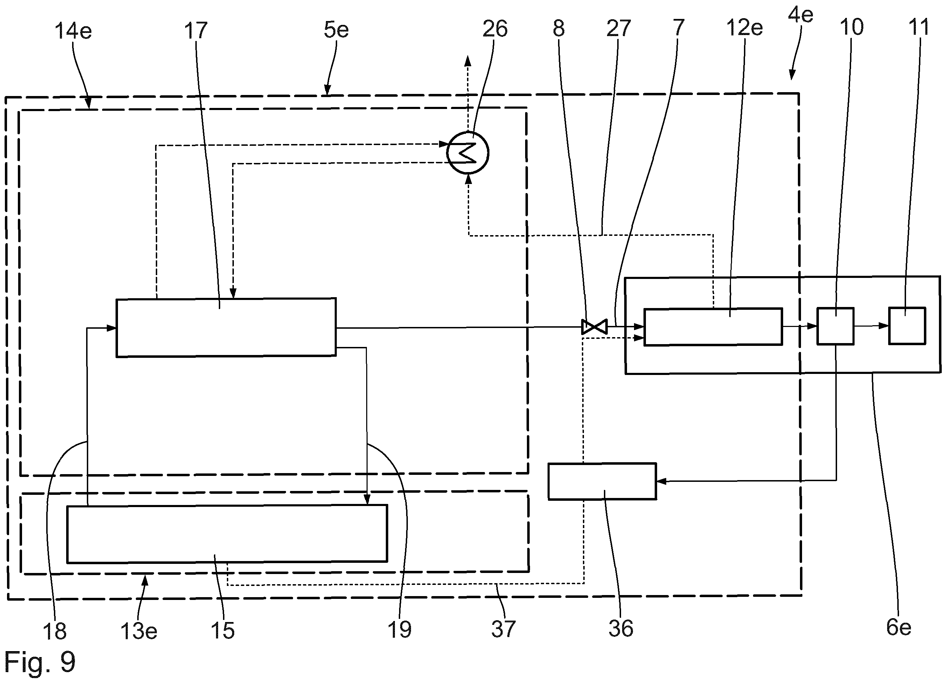

Im Folgenden wird unter Bezugnahme auf Fig. 9 ein weiteres, nicht erfindungsgemäßes Ausführungsbeispiel beschrieben. Konstruktiv identische Teile erhalten diesen Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten e.

Der wesentliche Unterschied gegenüber dem ersten Ausführungsbeispiel besteht darin, dass die Wandlungseinheit 6e eine metallische Festoxidbrennstoffzelle mSOFC aufweist. Die metallische Festoxidbrennstoffzelle mSOFC ist eine Hochtemperatur-Brennstoffzelle, die bei einer Betriebstemperatur von etwa 650 °C bis 1000 °C betrieben wird. Die Abwärme der metallischen Festoxidbrennstoffzelle 12e kann über die Abgasleitung 27 in dem zweiten Wärmetauscher 26 besonders effektiv für den Heizkreislauf 25 genutzt werden. Dadurch ergibt sich eine verbesserte Bereitstellung des Wärmebedarfs für die Dehydrierung in dem Dehydrierreaktor 17.

Die Wärmekopplung im Heizkreislauf 25 erfolgt insbesondere über einen Thermalölkreislauf. Durch die verbesserte Bereitstellung von Wärme für den Dehydrierreaktor 17 kann auf den Wasserstoffbrenner 24 verzichtet werden. Die Effektivität des Verfahrens ist dadurch verbessert.

Ein weiterer Vorteil ergibt sich daraus, dass die metallische Festoxidbrennstoffzelle 12e neben Wasserstoffgas auch mit Methan betrieben werden kann. Es ist auch denkbar, dass langkettige Kohlenwasserstoffe in der Brennstoffzelle 12e zu Methan zersetzt werden. Es ist insbesondere möglich, den in dem Dehydrierreaktor 17 freigesetzten Wasserstoffstrom ohne zusätzliche Aufreinigung aus dem Dehydrierreaktor 17 unmittelbar in die metallische Festoxidbrennstoffzelle 12e zu leiten. In dem Wasserstoffgasstrom enthaltene Verunreinigungen in Form von Kohlenwasserstoffen werden zu Methan zersetzt und dieses zusammen mit dem Wasserstoffgas in der metallischen Festoxidbrennstoffzelle 12e umgesetzt. Eine Reinigung des freigesetzten Wasserstoffgases kann komplett entfallen. Der wesentliche Vorteil besteht also darin, dass die Reinheitsanforderungen an den der metallischen Festoxidbrennstoffzelle 12e zugeführten Wasserstoffgasstrom geringer sind als die Anforderungen an eine herkömmliche Brennstoffzelle 12, insbesondere eine Protonenaustauschmembran(PEM-)Brennstoffzelle.

Die Anlage 4e weist eine zusätzliche Heizeinheit 36 in Form einer elektrischen Heizung auf. In der Heizeinheit 36, die mit der Speichereinheit 13e über eine Fluidleitung 37 verbunden ist, kann eine geringe Menge an Wasserstoffträgermedium LOHC-X zugeführt und in der elektrischen Heizung 36 verdampft werden. Der Dampf aus Kohlenwasserstoffen wird in der Brennstoffzelle 12e über den Zwischenschritt von Methan in elektrische Energie und Abwärme umgewandelt. Die Abwärme dient zum Vorheizen des Dehydrierreaktors 17. Sobald der Dehydrierreaktor 17 selbst ausreichend Wasserstoffgas in Folge von Dehydrierreaktionen freisetzt, kann die Zufuhr von Wasserstoffträgermedium aus dem Speicherbehälter 15 über die Fluidleitung 37 in die Heizeinheit 36 und die Brennstoffzelle 12e eingestellt werden. Durch die Heizeinheit 36 und die Verbindung der Heizeinheit mit der Speichereinheit 13e über die Fluidleitung 37 ist mit der Vorrichtung 5e ein Kaltstart des LOHC-Strangs möglich.

Gemäß dem gezeigten Ausführungsbeispiel ist die Speichereinheit 13e als Einkammer-Tanksystem ausgeführt mit einem Speicherbehälter 15, in dem eine Mischung aus beladenem und unbeladenem Wasserstoffträgermedium vorliegt. Das Einkammer-Tanksystem kann kleinbauend ausgeführt sein. Mit dem Einkammer-Tanksystem ergibt sich eine zusätzliche Optimierung des Gesamtbauraums. Es ist aber auch möglich, bei dem Ausführungsbeispiel gemäß Fig. 9 ein Mehrkammer-Tanksystem zu verwenden, wie es beispielsweise anhand des vorherigen Ausführungsbeispiels in Fig. 6 bis 8 erläutert worden ist.

Entsprechend ist der Dehydrierreaktor 17 über die Zuführleitung 18 und die Abführleitung 19 jeweils unmittelbar mit dem Speicherbehälter 15 verbunden.

## Patentansprüche

1. Verfahren zum Bereitstellen von Wasserstoffgas umfassend die Verfahrensschritte
- Zuführen von einen ersten Hydriergrad (hi) aufweisendem Wasserstoffträgermedium aus einem Speicherbehälter (15, 35) einer Speichereinheit (13; 13c; 13d) in einen Dehydrierreaktor (17) einer Entladeeinheit (14b; 14c; 14d), die mehrere Dehydrierreaktoren (17) aufweist, die in Abhängigkeit eines Lastzustandes in einer Parallel- und/oder in einer Reihenanordnung miteinander verknüpft sind, und wobei die Speichereinheit (13; 13c; 13d) mehrere Speicherbehälter (15, 16, 35) aufweist, die zum Speichern des Wasserstoffträgermediums bei unterschiedlichem Hydriergrad ausgeführt sind,
- Dehydrieren des Wasserstoffträgermediums auf einen zweiten Hydriergrad (h₂), der kleiner ist als der erste Hydriergrad (h₁), und dadurch Freisetzen von Wasserstoffgas,
wobei die Differenz aus dem ersten Hydriergrad (hi) und dem zweiten Hydriergrad (h₂) im Bereich eines für die Minimierung des Gesamtbauraums optimalen Dehydrierhubes (ΔDH) liegt.

2. Verfahren gemäß Anspruch 1, **dadurch gekennzeichnet, dass** der optimale Dehydrierhub (ΔDH) höchstens 85%, insbesondere höchstens 80%, insbesondere höchstens 70%, insbesondere höchstens 60%, insbesondere höchstens 55%, insbesondere höchstens 50% beträgt.

3. Verfahren gemäß einem der vorstehenden Ansprüche, **gekennzeichnet durch** Messen eines physikalischen und/oder chemischen Kennwertes des Wasserstoffträgermediums und/oder des freigesetzten Wasserstoffgases mittels einer Messeinheit (29).

4. Verfahren gemäß einem der vorstehenden Ansprüche, **gekennzeichnet durch** Regeln des optimalen Dehydrierhubes (ΔDH) in Abhängigkeit des gemessenen physikalischen und/oder chemischen Kennwertes mittels einer Regelungseinheit (30).

5. Verfahren gemäß einem der vorstehenden Ansprüche, **dadurch gekennzeichnet, dass** der erste Hydriergrad (h₁) größer ist als 90%, insbesondere größer als 92%, insbesondere größer als 95%, insbesondere größer als 97%, insbesondere größer als 99%.

6. Verfahren gemäß einem der vorstehenden Ansprüche, **dadurch gekennzeichnet, dass** der zweite Hydriergrad (h₂) mindestens 20%, insbesondere mindestens 30%, insbesondere mindestens 35%, insbesondere mindestens 40%, insbesondere mindestens 50% beträgt.

## Claims

1. Process for providing hydrogen gas, comprising the process steps
- supplying hydrogen carrier medium having a first hydrogenation degree (hi), from a storage container (15, 35) of a storage unit (13; 13c; 13d) into a dehydrogenation reactor (17) of a discharge unit (14b; 14c; 14d) having a plurality of dehydrogenation reactors (17), which are, depending on a load status, interconnected in a parallel and/or in a series arrangement, and wherein the storage unit (13; 13c; 13d) has a plurality of storage containers (15, 16, 35), which are performed to store the hydrogen carrier medium at different hydrogenation degree,
- dehydrogenation of the hydrogen carrier medium to a second hydrogenation degree (h₂), which is lower than the first hydrogenation degree (h₁), and therewith release of hydrogen gas,
wherein the difference between the first hydrogenation degree (h₁) and the second hydrogenation degree (h₂) lies within the scope of an optimal dehydrogenation stroke (ΔDH) for the minimization of the total installation space.

2. Process according to claim 1, **characterized in that** the optimal dehydrogenation stroke (ΔDH) is at most 85%, in particular at most 80%, in particular at most 70%, in particular at most 60%, in particular at most 55%, in particular at most 50%.

3. Process according to one of the preceding claims, **characterized by** measuring a physical and/or chemical characteristic value of the hydrogen carrier medium and/or of the released hydrogen gas, by means of a measuring unit (29).

4. Process according to one of the preceding claims, **characterized by** regulating the optimal dehydrogenation stroke (ΔDH) depending on the measured physical and/or chemical characteristic value, by means of a regulation unit (30).

5. Process according to one of the preceding claims, **characterized in that** the first hydrogenation degree (hi) is higher than 90%, in particular higher than 92%, in particular higher than 95%, in particular higher than 97%, in particular higher than 99%.

6. Process according to one of the preceding claims, **characterized in that** the second hydrogenation degree (h₂) is at least 20%, in particular at least 30%, in particular at least 35%, in particular at least 40%, in particular at least 50%.

## Revendications

1. Procédé de fourniture de gaz hydrogène comprenant les étapes de procédé
- approvisionnent d'un milieu support d'hydrogène présentant un premier degré d'hydrogénation (h₁) à partir d'un conteneur de stockage (15, 35) d'une unité de stockage (13 ; 13c ; 13d) dans un réacteur de déshydrogénation (17) d'une unité de décharge (14b ; 14c ; 14d) qui présente plusieurs réacteurs de déshydrogénation (17) qui sont combinés les uns avec les autres dans un arrangement en parallèle et/ou en une rangée en fonction d'un état de charge, et où l'unité de stockage (13 ; 13c ; 13d) présente plusieurs conteneurs de stockage (15, 16, 35) qui sont conçus pour le stockage du milieu support d'hydrogène avec un degré d'hydrogénation différent,
- déshydrogénation du milieu support d'hydrogène jusqu'à un deuxième degré d'hydrogénation (h₂) qui est inférieur au premier degré d'hydrogénation (h₁), et par conséquent, libération du gaz hydrogène,
dans lequel la différence entre le premier degré d'hydrogénation (h₁) et le deuxième degré d'hydrogénation (h₂) se situe dans la plage d'un cycle de déshydrogénation (ΔDH) optimal pour une minimisation de l'espace total d'installation.

2. Procédé selon la revendication 1, **caractérisé en ce que** le cycle de déshydratation (ΔDH) optimal est égal au plus à 85 %, en particulier au plus à 80 %, en particulier au plus à 70 %, en particulier au plus à 60 %, en particulier au plus à 55 %, en particulier au plus à 50 %.

3. Procédé selon l'une des revendications précédentes, **caractérisé par la** mesure d'une caractéristique physique et/ou chimique du milieu support d'hydrogène et/ou du gaz hydrogène libéré au moyen d'une unité de mesure (29).

4. Procédé selon l'une des revendications précédentes, **caractérisé par** un réglage du cycle de déshydrogénation (ΔDH) optimal en fonction de la caractéristique physique et/ou chimique mesurée au moyen d'une unité de régulation (30).

5. Procédé selon l'une des revendications précédentes, **caractérisé en ce que** le premier degré d'hydrogénation (h₁) est supérieur à 90 %, en particulier supérieur à 92 %, en particulier supérieur à 95 %, en particulier supérieur à 97 %, en particulier supérieur à 99 %.

6. Procédé selon l'une des revendications précédentes, **caractérisé en ce que** le deuxième degré d'hydrogénation (h₂) est égal au moins à 20 %, en particulier au moins à 30 %, en particulier au moins à 35 %, en particulier au moins à 40 %, en particulier au moins à 50 %.
